# EUROPEAN PATENT SPECIFICATION

(11) **EP 1 078 146 B1**
(45) Date of publication and mention of the grant of the patent: **29.01.2003**
(21) Application number: 99925127.5
(22) Date of filing: 12.05.1999
(51) Int. Cl.: E21B 19/02, E21B 19/06, E21B 19/16, E21B 19/08

(54) **APPARATUS AND METHOD FOR FACILITATING CONNECTION OF A TUBULAR TO A STRING OF TUBULARS**
VORRICHTUNG UND VERFAHREN ZUM ERLEICHTERN DER VERBINDUNG EINES ROHRES MIT EINEM ROHRSTRANG
APPAREIL ET PROCEDE PERMETTANT DE FACILITER LA CONNEXION D'UN ELEMENT TUBULAIRE AVEC UN TRAIN D'ELEMENTS TUBULAIRES

(30) Priority: 12.05.1998 US 76507
(43) Date of publication of application: 28.02.2001
(60) Divisional application: 02007898.6
(73) Proprietor: Weatherford/Lamb Inc., Wilmington, DE 19805 (US); LUCAS, Brian Ronald, Warlingham, Surrey CR6 9HJ (GB)
(72) Inventor: ABRAHAMSEN, Egil, Katy, TX 77450 (US); ALBRIGHT, Stephen, Lee, Houston, TX 77055 (US); HOLLINGSWORTH, Jimmy, Lawrence, Lafayette, LA 70508 (US); BEARB, Jean, Donald, McAllen, TX 78501 (US); LEICHT, Frederick, Marion, Cypress, TX 77429 (US); HAYES, Michael, Warren, Lafayette, LA 70503 (US); BIRDWELL, John, Cleveland, Liberty, TX 77575 (US); SPEIJ, Leendert, NL-4872 W.Z. Etten-Leur (NL)
(74) Representative: Harding, Richard Patrick
(86) International application number: PCT/GB99/01270
(87) International publication number: WO 99/058810

(56) References cited:
- EP-A- 0 171 144
- WO-A-99/34088
- US-A- 1 454 194
- US-A- 1 842 638
- US-A- 1 891 832
- US-A- 3 351 372
- US-A- 3 675 278
- US-A- 3 857 450
- US-A- 4 449 596
- US-A- 4 813 498

## Description

This invention relates to an apparatus and method for facilitating connection of a tubular to a string of tubulars and particularly, but not exclusively to connecting a stand of casing to a string of casing. This invention also relates to a device for facilitating connection of a tubular to a string of tubulars and to an elevator.

During the drilling of oil and gas wells it is necessary to connect and disconnect tubulars for use therein. Recently, there has been the need to use casing of a very large diameter for lining the well. In particular, modern casing may be forty-eight inches (1.2m) in diameter.

The weight of a single joint of modem casing causes many problems. In particular, casing is usually threaded. When a joint of casing is connected and disconnected from the string of casing, there is a high probability that the threads will become damaged by collisions therebetween.

It has been proposed to use a device called a "single joint compensating elevator" as disclosed in EP-A-0 171 144. The device enables the weight of a single joint to be compensated for, such that when the joint is lowered or raised to or from a string, the effective weight of the joint is zero. A pneumatic bellows or the like allows small adjustments to be made to allow the joint of casing to be made up to the string of casing. The device also allows over compensation to be made, such that upon disconnection of a joint from the string of casing, the joint springs from the string of casing. The device depends from the primary elevator of the rig, with a single joint elevator depending therefrom.

The above described arrangement requires the device to be attached to the elevator prior to each connection or disconnection and removed therefrom prior to lowering or raising the string, which is carried out by the primary elevator. This procedure wastes valuable rig time.

US patent no. 4813498 discloses a complex device for suspending a power swivel from a travelling block. The device includes an active counterbalance which supports the power swivel to allow vertical displacement of the power swivel relative to the travelling block. By fully extending the counterbalance the weight of the pipe string can be brought to bear directly on the travelling block.

According to the present invention there is provided an apparatus for facilitating the connection or disconnection of a tubular to or from a string of tubulars, comprising:
a travelling block or top drive;
a weight compensating device connected to the travelling block or top drive;
an elevator connected to the weight compensating device for supporting the tubular and arranged so that it is movable by the weight compensating device so as to enable the tubular to be raised and lowered with respect to the string of tubulars; and
at least one bail movable by the weight compensating device between
   a load bearing position in which the top end of the bail is supported by the travelling block or top drive and the bottom end of the bail supports the elevator, so that the weight of the elevator and any tubulars supported therein is held by the travelling block or top drive and not by the weight compensating device, and
   a non-load bearing position in which the top end of the bail is not supported by the travelling block or top drive, so that the weight of the elevator and any tubulars supported therein is held by the weight compensating device;
characterised in that the weight compensating device is located substantially between the travelling block or top drive and the elevator.

Other features and aspects of the invention are set out in claims 2 to 4.

The invention also provides an apparatus for facilitating the connection or disconnection of a tubular to or from a string of tubulars, comprising:
a travelling block or top drive;
a weight compensating device connected to the travelling block or top drive;
at least one bail supported at a top end thereof by the travelling block or top drive; and
an elevator connected to the weight compensating device for supporting the tubular and arranged so that it is movable by the weight compensating device so as to enable the tubular to be raised and lowered with respect to the string of tubulars;
wherein the elevator is movable by the weight compensating device between
a load bearing position in which the elevator is supported by the bottom end of the at least one bail, so that the weight of the elevator and any tubulars supported therein is held by the travelling block or top drive and not by the weight compensating device, and
a non-load bearing position in which the elevator is not supported by the bottom end of the at least one bail, so that the weight of the elevator and any tubulars supported therein is held by the weight compensating device;
characterised in that the weight compensating device is located substantially between the travelling block or top drive and the elevator.

The invention also provides a method for facilitating the connection or disconnection of a tubular to or from a string of tubulars using the apparatus of the invention, said method comprising the step of allowing the weight of said elevator to be compensated for together with said tubular.

For a better understanding of the present invention, reference will now be made, by way of example, to the accompanying drawings, in which:
Figure 1a is a side view of a first embodiment of a system in accordance with the present invention, in use, in a first stage of operation;
Figure 1b is a front view of the system of Figure 1a;
Figure 1c is a front view of the system of Figure 1a in a second stage of operation;
Figure 1d is an enlarged view of the system of Figure 1a in said first stage of operation;
Figure 1e is an enlarged view of the system of Figure 1a in said second stage of operation;
Figure 2a is a side view of a second embodiment of a system in accordance with the present invention, in use, in a first stage of operation;
Figure 2b is an enlarged view of part of the system of Figure 2a;
Figure 3a is a view of the system of Figure 2a in a second stage of operation;
Figure 3b is an enlarged view of part of the system of Figure 3a;
Figure 4a is a front view of a third embodiment of an apparatus in accordance with the present invention, in use in a first stage of operation;
Figure 4b is a front view of the apparatus of Figure 4a, in use, in a second stage of operation;
Figure 4c is a side view of the apparatus of Figure 4a, in use;
Figure 5 is a front view of a fourth embodiment of an apparatus in accordance with the present invention, in use;
Figure 6 is a front view of a fifth embodiment of an apparatus in accordance with the present invention, in use.

Referring to Figures 1a - 1e, there is shown a system in accordance with the present invention, generally identified by reference numeral 1.

System 1 comprises main bails 2 suspended from the eyes 4 of a rig's travelling block 6. Lower ends 8 of the main bails 2 extend through eyes 9 of an upper elevator 10. Cables 11 support the travelling block 6 in a rig (not shown).

Slings 12, made of, for example, steel or synthetic cables, are connected at their top ends to a lower end of the travelling block 6 and at their bottom ends to a lift eye 14 of a joint compensator 20 (which may be any known joint compensator, air cylinder compensator, hydraulic cylinder compensator, or air spring compensator, including any device for joint compensation disclosed herein.

An optional swivel 18 has its top end connected to a lower eye 22 of the joint compensator 20 and its bottom end connected to a shackle 16 which itself is connected to a top end of a sub 24. The sub 24 is threadedly connected to a standard, commercially available lift assembly 30 which has a lower hook end 26 to which are releasably connected links 28. A lower elevator 40 is connected to the lower ends of the links 28.

Both the elevators 10 and 40 may be any suitable known elevator and any elevator disclosed herein. As shown each elevator 10 and 40 is a hinged-door type elevator which is openable to receive a tubular and closable and latchable for holding a tubular. Slip-type elevators may be used. A stand 36 of two tubular joints 32 and 34 is held by the elevator 40 and supported by the system 1. Although two tubular joints are shown, it is to be understood that the system 1 can support one or a plurality of two, three, four or more joints, including an entire tubular string extending down into a wellbore.

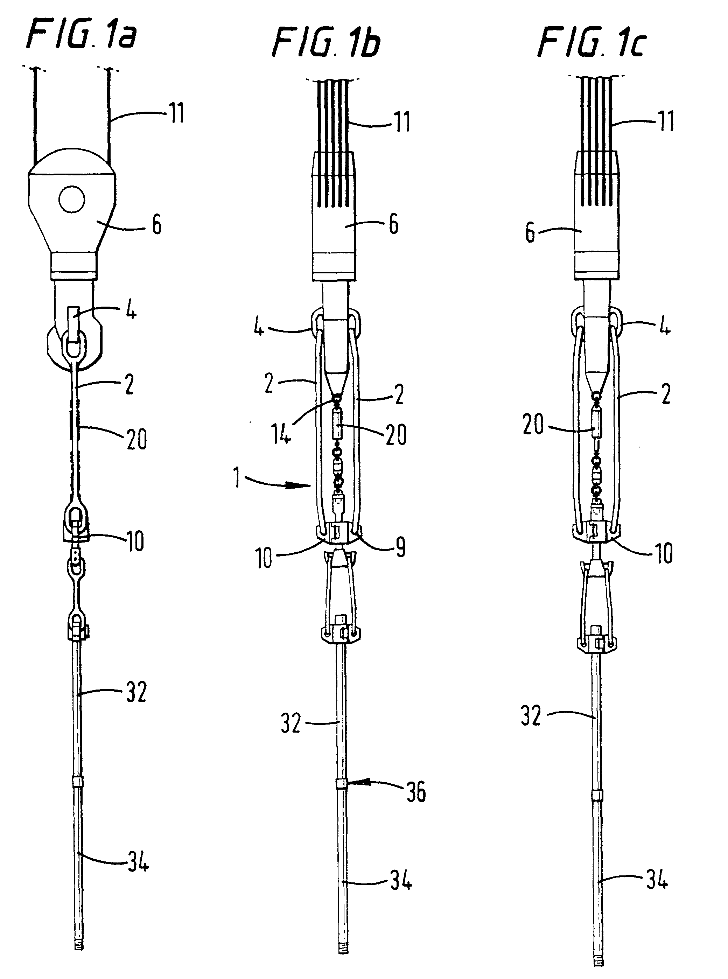

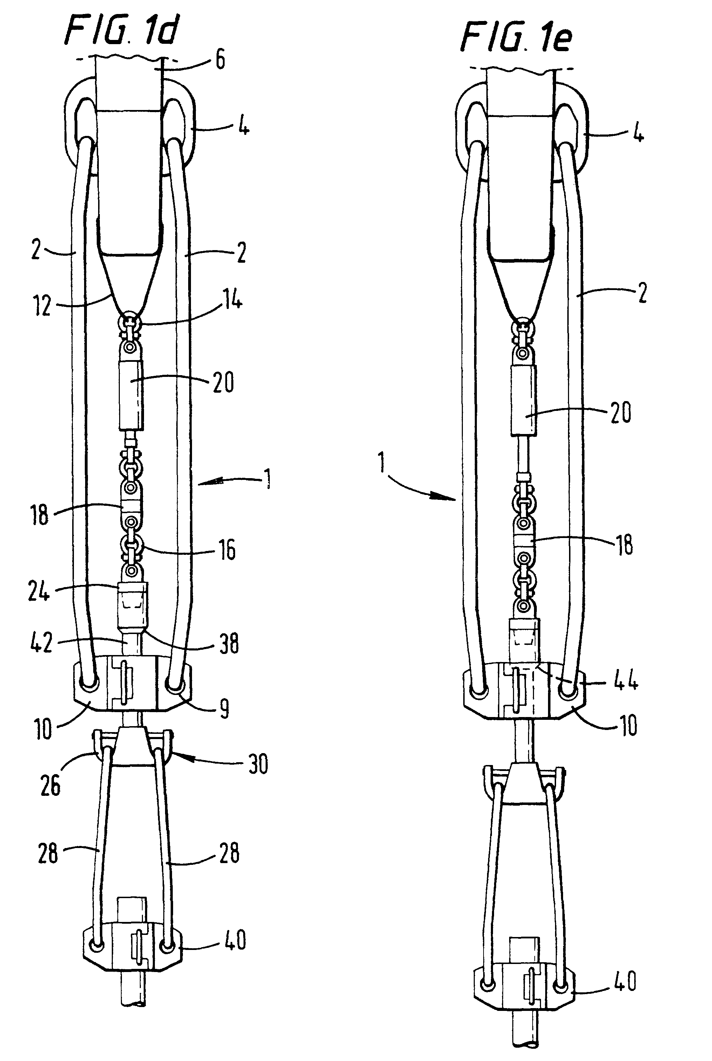

Figures 1b and 1d show the system 1 at a first stage of operation. The stand 36 of two tubular joints is being lifted by the system 1, and the weight of the stand 36 is being compensated for.

Figures 1c and 1e show the single joint compensator 20 in an extended position. The sub 24 abuts the top of the elevator 40. The system can now hold the weight of the entire string of tubulars to which the stand 36 may be attached or detached.

Initially, the elevator 40 is latched onto a new stand of tubulars. With the travelling block 6, the stand is lifted to a vertical position. At this point, a shoulder 38 of a shaft 42 of the assembly 30 is bottomed out on a corresponding shoulder 44 of a bowl 46 of the elevator 10. The compensator 20 is then activated to compensate for the weight of the stand, raising the shaft 42 so that the elevator 10 no longer supports the stand, as shown in Figure 1D.

While the stand's weight is compensated for by the compensator 20, the stand is easily manipulable and its lower end is positioned above and then lowered into a top joint of a tubular string being supported by the rig's slips on the rig floor (not shown). As the stand is made up into the string, the compensator 20 permits the compensated lowering of the stand. When the joint is made up, the rig slips are released; the travelling block system raises the system 1; the shoulder 38 bottoms out on the bowl's shoulder 44; and then the rig's system supports and lowers the entire string. Again the rig slips are set; the elevator 40 is released; and the process of adding an additional stand begins again. A reverse process is used for break-out operations, with the joint compensator 20 activated prior to or following initial lifting up on the string and setting of the rig's slips. As a joint is unscrewed and rising, the joint compensator 20 compensates for the weight of the joint.

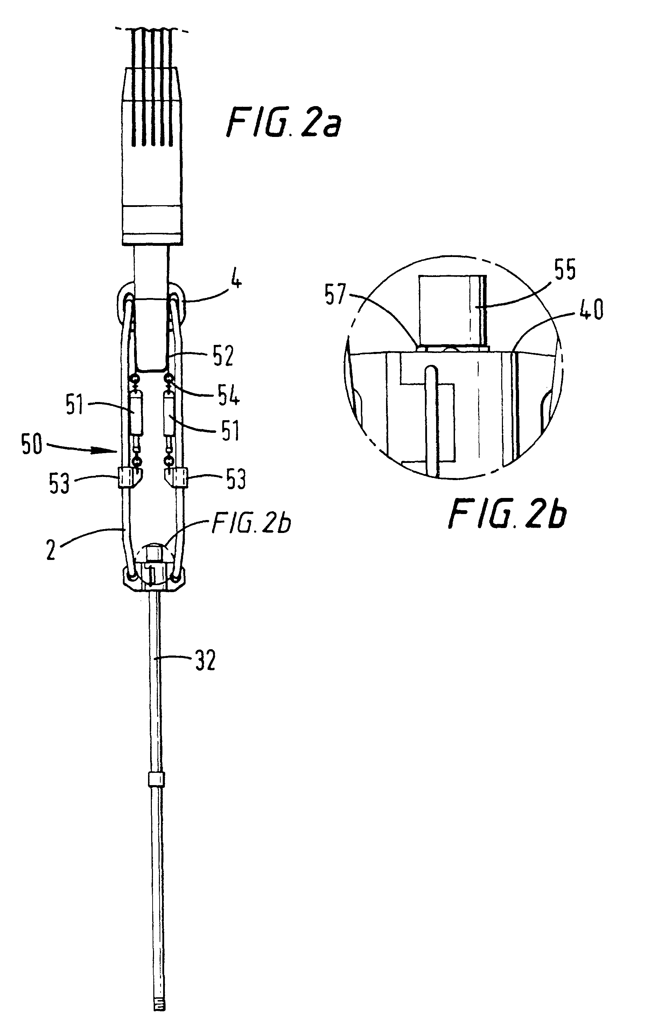

Figures 2a and 2b show a system 50 according to the present invention with some parts that are like those of the system 1 and which bear the same identifying numerals. Slings 52 through the eyes 4 connect the tops of joint compensators 51 to. the eyes 4. Clamps 53 releasably clamp the lower ends of the joint compensators 51 to the bails 2. Shackles 54 provide for pivoting of the joint compensators 51.

As shown in Figure 2b, an upper part 55 of the tubular 32 is resting on rollers (one shown) 57 rotatably mounted to the elevator 40's body.

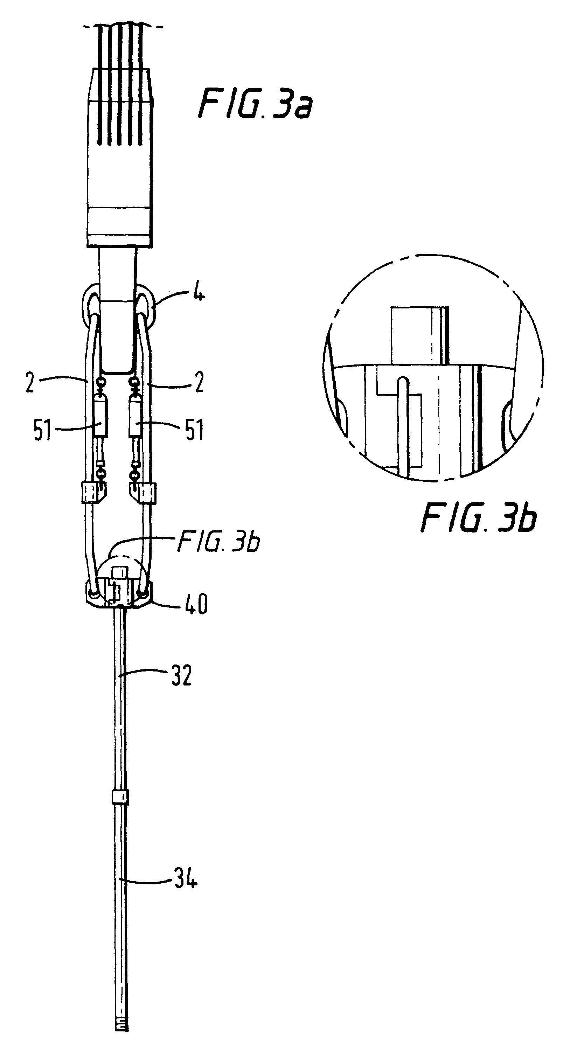

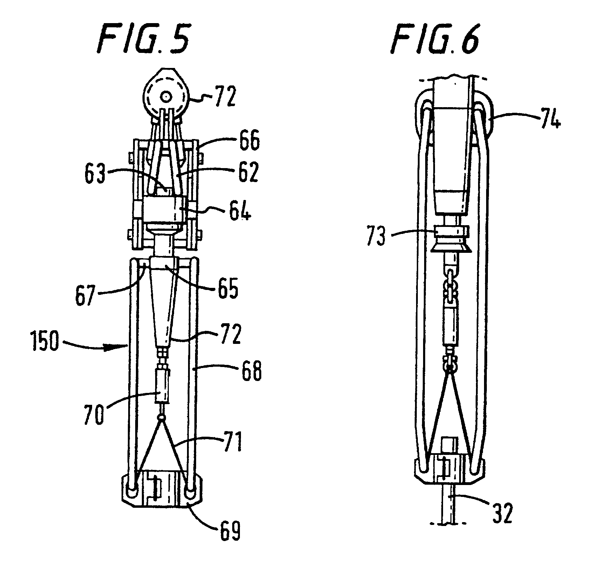

As shown in Figure 3b, the rollers 57 have been moved down, compressing compression members (not shown, see Figures 5a, 5b). As shown in Figure 3a, the joint compensators 51 are compensating for the weight of the tubulars 32, 34; and the top shackles of the bails 2 are riding up in the eyes 4. The eyes 4 are not at this point bearing the weight through the entire length of the bails 2 of the system 50 and the tubulars 32, 34. As shown in Figure 3b, the elevator 40, bails 2 and eyes 4 are bearing this weight and the joint compensators 51 are not compensating for the weight of the tubulars. Typical control lines and control apparatus (not shown) are used with the compensators 51.

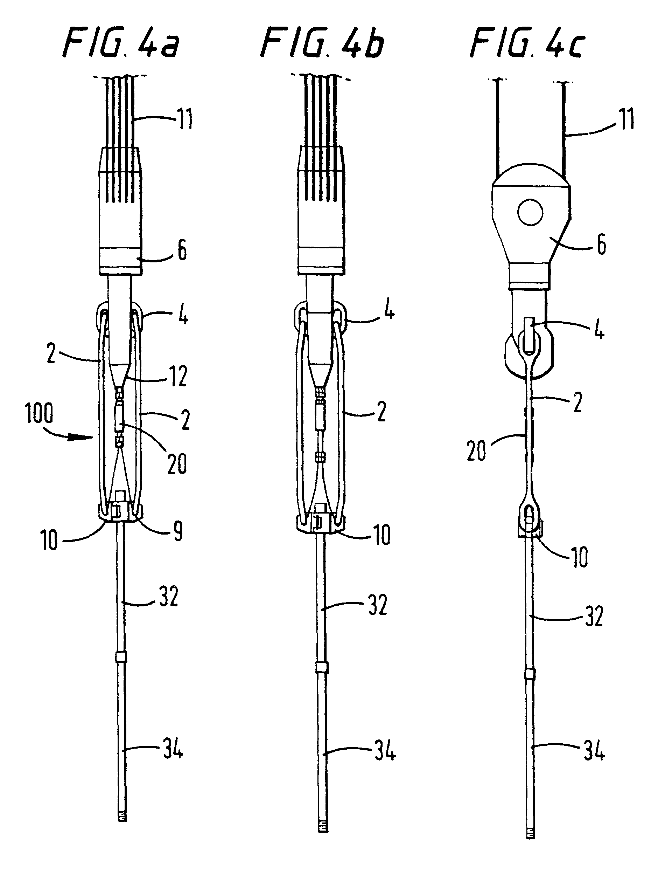

Figures 4a to 6 show a system 100 according to the present invention with the travelling block 6 with the cables 11 supporting the system 100 in a rig derrick (not shown). The bails 2 support the elevator 10 which holds the tubulars 32, 34 (all as in Figure 1a previously described). Slings 12 support joint compensator 20 below the travelling block 6 and slings 53 connect the joint compensator 20 to the elevator 10 so that the joint compensator (as shown in Figure 4a) compensates for the weight of tubulars held by the elevator 10. Figure 4b shows the eyes 4, bails 2 and elevator 10 supporting the tubulars 32, 34 (and whatever may be connected thereto). The joint compensator 20 may be any compensator disclosed herein (as may be the compensator 70, Figure 4d). Typical control lines and control apparatus are used with the joint compensator 20 (and the compensators 20, 70) or such lines and apparatus as disclosed herein (as is the case for any compensator in Figures 1a, 2a, 3a, and 5).

Figure 5 shows a top drive system 150 according to the present invention suspended below a travelling block 72 with eyes 62 to which are connected a swivel 63, a power train 64 and a top drive 65. A guide dolly 66 holds and guides the top drive 65. Lift eyes 67 connected to the top drive support bails 68 which support a lower elevator 69 (like the elevator 20). A joint compensator 70 is connected to a lower end of a lift sub 72 which is connected to the top drive 65 and slings 71 interconnect the lower elevator 69 and the joint compensator 70.

Figure 6 shows an embodiment of the system 150 compensating for the weight of a tubular 32 (or a tubular string including the tubular 32). The embodiment of Figure 6 has an elevator 74 instead of the lift eyes 67 of Figure 5. There is also provided a circulating head 73 for use with circulating fluids in the tubulars to be connected and disconnected to or from a string of tubulars.

## Claims

1. An apparatus for facilitating the connection or disconnection of a tubular to or from a string of tubulars, comprising:
a travelling block (6) or top drive;
a weight compensating device (20) connected to the travelling block (6) or top drive;
an elevator connected to the weight compensating device for supporting the tubular and arranged so that it is movable by the weight compensating device so as to enable the tubular (32) to be raised and lowered with respect to the string of tubulars; and
at least one bail (2) movable by the weight compensating device between
a load bearing position in which the top end of the bail is supported by the travelling block or top drive and the bottom end of the bail supports the elevator, so that the weight of the elevator and any tubulars supported therein is held by the travelling block or top drive and not by the weight compensating device, and
a non-load bearing position in which the top end of the bail is not supported by the travelling block or top drive, so that the weight of the elevator and any tubulars supported therein is held by the weight compensating device;
**characterised in that** the weight compensating device (20) is located substantially between the travelling block (6) or top drive and the elevator.

2. An apparatus as claimed in claim 1, wherein the elevator is connected to the top drive via a part of the at least one bail (2).

3. An apparatus as claimed in claim 1 or 2, wherein said at least one bail (2) depends from the travelling block (6) or top drive via ears (4).

4. An apparatus as claimed in claim 3, wherein said ears (4) allow vertical movement of said at least one bail (2) therein.

5. An apparatus for facilitating the connection or disconnection of a tubular to or from a string of tubulars, comprising:
a travelling block (6) or top drive;
a weight compensating device (20) connected to the travelling block (6) or top drive;
at least one bail (2) supported at a top end thereof by the travelling block or top drive; and
an elevator connected to the weight compensating device for supporting the tubular and arranged so that it is movable by the weight compensating device so as to enable the tubular (32) to be raised and lowered with respect to the string of tubulars;
wherein the elevator is movable by the weight compensating device between
a load bearing position in which the elevator is supported by the bottom end of the at least one bail, so that the weight of the elevator and any tubulars supported therein is held by the travelling block or top drive and not by the weight compensating device, and
a non-load bearing position in which the elevator is not supported by the bottom end of the at least one bail, so that the weight of the elevator and any tubulars supported therein is held by the weight compensating device;
**characterised in that** the weight compensating device (20) is located substantially between the travelling block (6) or top drive and the elevator.

6. A method for facilitating the connection or disconnection of a tubular to or from a string of tubulars using the apparatus as claimed in any preceding claim, said method comprising the step of allowing the weight of said elevator to be compensated for together with said tubular.

## Patentansprüche

1. Vorrichtung, um das Verbinden oder Trennen eines Rohrabschnitts mit oder von einem Strang von Rohrabschnitten zu erleichtern, wobei die Vorrichtung folgendes umfaßt:
einen Flaschenzugblock (6) oder Aufsatzantrieb,
eine Gewichtsausgleichseinrichtung (20), die mit dem Flaschenzugblock (6) oder Aufsatzantrieb verbunden ist,
einen Gestängeanheber, der mit der Gewichtsausgleichseinrichtung verbunden ist, um den Rohrabschnitt zu tragen, und derart angeordnet, daß er durch die Gewichtsausgleichseinrichtung so bewegt werden kann, daß ein Heben und Senken des Rohrabschnitts (32) im Verhältnis zu dem Strang von Rohrabschnitten ermöglicht wird, und
wenigstens ein Gehänge (2), das durch die Gewichtsausgleichseinrichtung bewegt werden kann zwischen
einer lasttragenden Position, in der das obere Ende des Gehänges durch den Flaschenzugblock oder Aufsatzantrieb getragen wird und das untere Ende des Gehänges den Gestängeanheber trägt, so daß das Gewicht des Gestängeanhebers und der in demselben getragenen Rohrabschnitte durch den Flaschenzugblock oder Aufsatzantrieb und nicht durch die Gewichtsausgleichseinrichtung gehalten wird, und
einer nicht-lasttragenden Position, in der das obere Ende des Gehänges nicht durch den Flaschenzugblock oder Aufsatzantrieb getragen wird, so daß das Gewicht des Gestängeanhebers und der in demselben getragenen Rohrabschnitte durch die Gewichtsausgleichseinrichtung gehalten wird,
**dadurch gekennzeichnet, daß** sich die Gewichtsausgleichseinrichtung (20) wesentlich zwischen dem Flaschenzugblock (6) oder Aufsatzantrieb und dem Gestängeanheber befindet.

2. Vorrichtung nach Anspruch 1, bei welcher der Gestängeanheber mit dem Aufsatzantrieb über einen Teil des wenigstens einen Gehänges (2) verbunden ist.

3. Vorrichtung nach Anspruch 1 oder 2, bei der das wenigstens ein Gehänge (2) über Ösen (4) von dem Flaschenzugblock (6) oder Aufsatzantrieb herabhängt.

4. Vorrichtung nach Anspruch 3, bei der die Ösen (4) eine vertikale Bewegung des wenigstens einen Gehänges (2) in denselben ermöglichen.

5. Vorrichtung, um das Verbinden oder Trennen eines Rohrabschnitts mit oder von einem Strang von Rohrabschnitten zu erleichtern, wobei die Vorrichtung folgendes umfaßt:
einen Flaschenzugblock (6) oder Aufsatzantrieb,
eine Gewichtsausgleichseinrichtung (20), die mit dem Flaschenzugblock (6) oder Aufsatzantrieb verbunden ist,
wenigstens ein Gehänge (2), das an einem oberen Ende desselben durch den Flaschenzugblock oder Aufsatzantrieb getragen wird, und
einen Gestängeanheber, der mit der Gewichtsausgleichseinrichtung verbunden ist, um den Rohrabschnitt zu tragen, und derart angeordnet, daß er durch die Gewichtsausgleichseinrichtung so bewegt werden kann, daß ein Heben und Senken des Rohrabschnitts (32) im Verhältnis zu dem Strang von Rohrabschnitten ermöglicht wird,
bei welcher der Gestängeanheber durch die Gewichtsausgleichseinrichtung bewegt werden kann zwischen
einer lasttragenden Position, in welcher der Gestängeanheber durch das untere Ende des wenigstens einen Gehänges getragen wird, so daß das Gewicht des Gestängeanhebers und der in demselben getragenen Rohrabschnitte durch den Flaschenzugblock oder Aufsatzantrieb und nicht durch die Gewichtsausgleichseinrichtung gehalten wird, und
einer nicht-lasttragenden Position, in welcher der Gestängeanheber nicht durch das untere Ende des wenigstens einen Gehänges getragen wird, so daß das Gewicht des Gestängeanhebers und der in demselben getragenen Rohrabschnitte durch die Gewichtsausgleichseinrichtung gehalten wird,
**dadurch gekennzeichnet, daß** sich die Gewichtsausgleichseinrichtung (20) wesentlich zwischen dem Flaschenzugblock (6) oder Aufsatzantrieb und dem Gestängeanheber befindet.

6. Verfahren, um das Verbinden oder Trennen eines Rohrabschnitts mit oder von einem Strang von Rohrabschnitten zu erleichtern, das eine Vorrichtung nach einem der vorhergehenden Ansprüche verwendet, wobei das Verfahren den Schritt umfaßt, zu ermöglichen, daß das Gewicht des Gestängeanhebers zusammen mit dem Rohrabschnitt ausgeglichen wird.

## Revendications

1. Dispositif destiné à faciliter la connexion d'un tube à un train de tubes ainsi que la déconnexion correspondante, comprenant :
un moufle mobile (6) ou un entraînement supérieur ;
un dispositif de compensation du poids (20) connecté au moufle mobile (6) ou à l'entraînement supérieur ;
un élévateur connecté au dispositif de compensation du poids pour supporter le tube et agencé de sorte à pouvoir être déplacé par le dispositif de compensation du poids, de sorte à permettre la remontée et la descente du tube (32) par rapport au train de tubes ; et
au moins une anse (2) pouvant être déplacée par le dispositif de compensation du poids entre
une position de support de charge, dans laquelle l'extrémité supérieure de l'anse est supportée par le moufle mobile ou l'entraînement supérieur, l'extrémité inférieure de l'anse supportant l'élévateur, de sorte que le poids de l'élévateur et de quelconques tubes qui y sont supportés est supporté par le moufle mobile ou l'entraînement supérieur et non pas par le dispositif de compensation du poids, et
une position sans support de charge, dans laquelle l'extrémité supérieure de l'anse n'est pas supportée par le moufle mobile ou l'entraînement supérieur, de sorte que le poids de l'élévateur et de quelconques tubes qui y sont supportés est supporté par le dispositif de compensation du poids ;
**caractérisé en ce que** le dispositif de compensation du poids (20) est agencé pratiquement entre le moufle mobile (6) ou l'entraînement supérieur et l'élévateur.

2. Dispositif selon la revendication 1, dans lequel l'élévateur est connecté à l'entraînement supérieur par une partie de la au moins une anse (2).

3. Dispositif selon les revendications 1 ou 2, dans lequel ladite au moins une anse (2) est suspendue sur le moufle mobile (6) ou l'entraînement supérieur par l'intermédiaire de pattes (4).

4. Dispositif selon la revendication 3, dans lequel lesdites pattes (4) permettent le déplacement vertical de la au moins une anse (2).

5. Dispositif destiné à faciliter la connexion d'un tube à un train de tubes ainsi que la déconnexion correspondante, comprenant :
un moufle mobile (6) ou un entraînement supérieur ;
un dispositif de compensation du poids (20) connecté au moufle mobile (6) ou à l'entraînement supérieur ;
au moins une anse (2) supportée au niveau d'une extrémité supérieure correspondante par le moufle mobile ou l'entraînement supérieur ; et
un élévateur connecté au dispositif de compensation du poids pour supporter le tube et agencé de sorte à pouvoir être déplacé par le dispositif de compensation du poids, de sorte à permettre la remontée et la descente du tube (32) par rapport au train de tubes ;
l'élévateur pouvant être déplacé par le dispositif de compensation du poids entre
une position de support de charge, dans laquelle l'élévateur est supporté par l'extrémité inférieure de la au moins une anse, de sorte que le poids de l'élévateur et de quelconques tubes qui y sont supportés est supporté par le moufle mobile ou l'entraînement supérieur et non pas par le dispositif de compensation du poids, et
une position sans support de charge, dans laquelle l'élévateur n'est pas supporté par l'extrémité inférieure de la au moins une anse, de sorte que le poids de l'élévateur et de quelconques tubes qui y sont supportés est supporté par le dispositif de compensation du poids ;
**caractérisé en ce que** le dispositif de compensation du poids (20) est agencé pratiquement entre le moufle mobile (6) ou l'entraînement supérieur et l'élévateur.

6. Procédé destiné à faciliter la connexion d'un tube à un train de tubes ou la déconnexion correspondante par l'intermédiaire du dispositif selon l'une quelconque des revendications précédentes, ledit procédé comprenant l'étape consistant à permettre la compensation du poids dudit élévateur ensemble avec ledit tube.
